# EUROPEAN PATENT SPECIFICATION

(11) **EP 4 605 200 B1**
(45) Date of publication and mention of the grant of the patent: **29.07.2026**
(21) Application number: 22808623.7
(22) Date of filing: 17.10.2022
(51) Int. Cl.: B29B 9/06, B29B 9/12, B29B 7/48, B29B 7/72, B29B 7/82, B29C 48/04, B29C 48/05, B29C 48/88, B29C 48/44, B29C 48/00, C08J 3/22, C08K 5/00, C08K 5/09, F17C 9/02, F17C 13/04, B29K 27/06, B29K 105/00

(54) **METHOD AND DEVICE FOR PRODUCING A STABILIZER COMPOSITION IN GRANULATE FORM AND AN ACCORDINGLY PRODUCED STABILIZER COMPOSITION**
VERFAHREN UND VORRICHTUNG ZUR HERSTELLUNG EINER STABILISATORZUSAMMENSETZUNG IN GRANULATFORM UND EINE ENTSPRECHEND HERGESTELLTE STABILISATORZUSAMMENSETZUNG
PROCÉDÉ ET DISPOSITIF POUR LA PRODUCTION D'UNE COMPOSITION DE STABILISANT SOUS FORME DE GRANULÉS ET COMPOSITION DE STABILISANT AINSI PRODUITE

(43) Date of publication of application: 27.08.2025
(73) Proprietor: Akdeniz Chemson Additives AG, 9601 Arnoldstein (AT)
(72) Inventor: MEINHARDT, Georg Andreas, 9601 Arnoldstein (AT); KOLLER, Herbert, 9601 Arnoldstein (AT)
(74) Representative: Cayli, Hülya
(86) International application number: PCT/EP2022/078828
(87) International publication number: WO 2024/083304

(56) References cited:
- WO-A1-2010/075597
- WO-A1-2018/107193
- WO-A1-2022/192928
- DE-A1- 19 755 561
- JP-A- H04 310 707
- JP-U- H0 624 913
- US-A1- 2010 102 467

## Description

The invention relates to a method for producing a stabilizer composition in granulate form, wherein the stabilizer composition is produced and is pressed through at least one opening in a flowable state as a strand, then the stabilizer composition emerging from the at least one opening is cut to length by forming a granulate under a coolant supply.

The invention also relates to a device for producing a stabilizer composition in granulate form, comprising a mixing device for processing components into a flowable stabilizer composition, a granulating unit with at least one opening through which the flowable stabilizer composition supplied by the mixing device can be introduced, and a separating unit with which the stabilizer composition introduced into the granulating unit can be cut to length by forming a granulate, and a coolant supply in order to apply the coolant to the granulate.

The invention also relates to a stabilizer composition in granulate form.

Stabilizers are used in plastics in order to increase their stability first during processing, and then later in their use, for example, in shaped products, such as profiles. Corresponding stabilizer compositions generally comprise a multitude of components with which various aspects of resistance in terms of light irradiation, in particular UV exposure, temperature, atmospheric conditions and the like are addressed. Individual components can also be admixed specifically for processing. The individual components are generally primarily organic components, such as various fatty acids or salts thereof, on the one hand, and inorganic materials, such as zeolites or titanium dioxides, on the other hand. During the processing of plastics such as polyvinyl chloride (PVC), the stabilizer compositions are then mixed with them, wherein both the plastics and the stabilizer composition should preferably be present in the form of a powder. For this purpose, it is again preferred that a stabilizer composition used is supplied to the plastics processor in a granulate form.

Put differently, stabilizers in powder form have the disadvantage that they can be prone to dust explosions, which is not the case with a granulate form. Then during processing, the delivered granulate itself is comminuted directly into a powder, so that finally a safe transport and a likewise safe storage can take place or is provided until use.

For the production of a granulate of a stabilizer composition, the latter must be pressed through a perforated plate and cut to length. This can be done, for example, using rotating knives. In this context, it is also known to introduce water for the removal, but also for a simultaneous cooling of the granulate that was produced and cut to length. In this context, it is referred to what is known as underwater granulation among experts.

Patent document no. WO2022192928A1 discloses such method for producing a stabiliser composition in granulate form. In said method, stabilizer composition is produced and is pressed through an opening and cut into pieces under water. In this method, granulate form generated under water is carried and cooled by the water.

The processing of stabilizer compositions is generally difficult because of the different nature of the components, as already mentioned, and their distinctly different properties resulting therefrom. In particular, the viscosity of the mixture to be processed can lead to major problems. If, for instance, tablets are to be produced instead of granulates, which is carried out in a batch process by mixing the components and then dripping them down onto a cooling belt, this can only be achieved if a suitable viscosity can be set. Otherwise, appropriate stabilizer compositions cannot be produced in a batch process. A person skilled in the art has to deal with similar problems during granulation. If the viscosity of the produced stabilizer composition is low while it is pressed through a perforated plate, the partial strands formed as a result of pressing through the perforated plate, or the granulate which is then cut to length can readily stick together. This represents a frequent problem, since the extruded stabilizer composition has to be cut to length at a relatively high temperature in a quasi-pasty state. Therefore, water is used for intensive cooling in underwater granulation. This is intended to prevent the partial strands and/or the individual granulate grains from sticking together.

Although granulation under water has been found to prevent undesirable sticking of individual granulate particles, it also entails considerable disadvantages: First, the stabilizer material is cut to length during granulation and thus its surface area is increased, which is already remarkable anyway because of the separation into partial strands which has taken place previously. As a result of contact with water, there is a possibility that the stabilizer composition's water-soluble components, for example, co-stabilizers such as calcium acetylacetonate, or inorganic components, e.g., soluble salts such as sodium perchlorate are dissolved out to such an extent that the intended stabilizer composition is no longer obtained exactly. Moreover, the contact with water as a relatively strongly acting cooling medium leads to the fact that the surface of the granulate becomes often very fissured. This can, in turn, cause the granulate to have a high proportion of fines, i.e. noticeable proportions of fine powder. This is undesirable for storage in silos in terms of those who process plastics and makes conveying and exact dosing more difficult. These disadvantages can be exacerbated if the handling of the granulate additionally causes individual edges to break off because of the fissured surface so that the fine fraction is further increased.

In addition, the achievable bulk density is also reduced by an inhomogeneous particle distribution.

A further disadvantage is that it has been found that underwater granulation with water can lead to color deviations in the granulate. Although the effects have not yet been fully elucidated, this appears to be due to the intensive contact with water during granulation.

This is where the invention comes in. It is an object of the invention to further develop a method of the type mentioned at the outset in such a way that the above-described disadvantages are eliminated or are at least reduced.

A further object of the invention consists in specifying a device of the type mentioned at the outset, with which a method according to the invention can be implemented, so that the corresponding advantages can be realized.

Finally, it is an object of the invention to specify an accordingly produced stabilizer composition.

The first object of the invention is achieved if, in a method of the type mentioned at the outset, a mixture of a liquid and a gas is supplied as a coolant.

In the context of the invention, it has been shown that the above-described disadvantages can be avoided or at least reduced in a corresponding method. It is particularly advantageous that, owing to the combined granulation with water and air, in particular with a water-air mixture, a granulate with a little fissured surface and, above all, with a lower fines fraction can be produced. This facilitates both subsequent storage and conveying, since the fines fraction is low and does not increase considerably even during conveying, because edge break-outs are avoided on account of a less fissured surface, and, moreover, the bulk density of the granulate is also improved.

In particular, it is also possible with a method according to the invention to process a stabilizer composition using an extruder, in particular also a planetary roller extruder. It is basically a problem with an extruder or specifically with a planetary roller extruder that relatively high temperatures of the stabilizer composition are achieved in the mixing state owing to the shear forces introduced during processing. The introduction of high shear forces is of course desirable in order to achieve an intimate mixing of the starting components for the stabilizer composition, but also leads to a high energy input. The impact of a mixture of water and air during granulation ensures that sufficient energy is dissipated, so that the individual granulate particles, as they are present after they were cut to length, do not stick to one another. The application of a water-air mixture appears to favor non-adhesion or a good separation of the granulate particles after they are cut to length. In addition, a certain proportion of air in the water-air mixture also explicitly reduces the dissolution of individual components out of the finished granulate through the impact of water, especially with regard to water-soluble components, such as sodium perchlorate or the like.

In principle, any desired liquids can be used as the liquid within the scope of the invention. It is only necessary that the liquid provides a transport and cooling function. For this purpose, water is preferably used, since it is a readily available and easily handled resource.

Also a variety of gases can be used just like the way that basically different liquids are used. Particularly suitable for this purpose are easily handled inert gases, for instance noble gases, such as argon, or in terms of stabilizer compositions, inert gases, such as nitrogen. Similar to how water is preferably used as a readily available resource for a liquid, air is preferably used as the gas.

The stabilizer composition is generally cut to length at a temperature of around 50 °C to 100 °C. The liquid, e.g. water, is then preferably supplied at a temperature of up to 60 °C, in particular up to 50 °C, in a temperature range of 35 °C to 50 °C, for example. Air or optionally another gas is preferably supplied at ambient temperature.

The liquid and the gas can be mixed in a chamber located before the emerging point of the stabilizer composition or the granulate which is produced by cutting to length. The flow rates of the liquid, e.g. water, and of the gas, e.g. air, can be adapted to the throughput of the stabilizer composition as it is continuously provided e.g. by means of continuous extrusion from an extruder, such as a planetary roller extruder.

The stabilizer composition can preferably be prepared using an extruder. In particular, a planetary roller extruder can be used. A planetary roller extruder offers the advantage that the stabilizer composition can be prepared in a continuous fashion. If a planetary roller extruder with a plurality of modules is used, the shearing force can also be adjusted in the individual modules by means of a number of the planetary rollers used, which is favorable in order to be able to influence the temperature of the emerging stabilizer composition, in particular at the end of the planetary roller extruder. The introduction of shear forces also results in an energy input and therefore essentially in higher temperatures. If fewer planetary rollers are provided in the corresponding modules at the end of the planetary roller extruder, the introduction of shearing forces and therewith also the temperature of the stabilizer composition drop toward the end of the extruder, this in turn provides the stabilizer composition with an optimum temperature for granulation. The temperature is dimensioned in such a way that the flowable and thus forwardly forced stabilizer composition can still be moved well, but on the other hand, the temperature is not so high that the stabilizer composition is very highly fluid and despite the supply of a mixture of a liquid and a gas, that the cut-to-length granulate stick together and merely form sticky aggregates which cannot be closely defined in terms of shape. The aforementioned temperature range of around 55 °C to 100 °C for the extruded stabilizer composition proves to be a suitable temperature range for granulation.

In particular, a planetary roller extruder with a plurality of modules, preferably with at least three modules, particularly with four to eight modules can be used. A planetary roller extruder with a plurality of modules has the advantage that the temperature of the individual modules can be controlled separately, so that desired temperatures or temperature ranges can be set along the extruder as a function of individual reactions or mixing processes and, if appropriate, of the liberation of water. Also the shearing forces can be varied in this case and thus be adapted in the individual modules. The number of modules here is preferably kept such that it is adapted to the stabilizer composition to be produced or to the components required for this purpose. Basically, the components are extruded in a temperature range of about 80 °C to 240 °C. In doing so, it is preferably provided that the temperature along the planetary roller extruder is first set to rise and then to fall again downstream. A higher temperature at the beginning of the planetary roller extruder or of the extrusion process is necessary to partially melt the components and thus ensure an intimate mixing. Towards the end of the extrusion process, when a premix and/or temperature-sensitive pigments are admixed, for example, the temperature is preferably adjusted to be lowered again. In this lowered region, sensitive components such as an impact resistance modifier can then be admixed so that these too are subjected only to a slight temperature load.

It is further preferred basically that the shear forces in the planetary roller extruder are set to decrease downstream, in particular by reducing the number of planetary rollers in the planetary roller extruder in the downstream direction. This can be achieved in a simple manner by providing a smaller number of planetary spindles in a last module of the planetary roller extruder than provided in the previous modules, for example.

If a plurality of modules are provided in a planetary roller extruder, typical temperature ranges can be selected in accordance with Table 1 below.

**Table 1: Temperature ranges of individual modules during the processing of a stabilizer composition in a planetary roller extruder**

| Module No. | Temperature range [°C] | Preferred temperature range [°C] |
|---|---|---|
| 1 | 90 to 120 | 105 to 115 |
| 2 | 180 to 205 | 185 to 200 |
| 3 | 220 to 250 | 225 to 245 |
| 4 | 190 to 220 | 190 to 210 |
| 5 | 160 to 195 | 170 to 190 |
| 6 | 80 to 115 | 90 to 110 |
| 7 | 80 to 110 | 90 to 105 |

The stabilizer composition is preferably pressed through a plate with a plurality of openings for granulation. This can be a perforated plate with a plurality of openings which are arranged in a circle and are preferably equidistant from one another on the circumference of the circle. In order to bring the extruded strand into the openings and to divide it for this purpose, the plate can have a central conical widening, on which the strand strikes during extrusion and by means of which the strand is divided into individual partial strands for the openings.

When an extruder is used, the stabilizer composition generally leaves the extruder unpressurized. It may therefore be necessary that the stabilizer composition is mechanically conveyed to the plate. For example, a pump can be provided for conveying purposes.

The granulate is preferably conveyed to a separating device by the mixture, then the granulate is separated from the mixture in the separating device and is optionally dried afterwards. As soon as the granulate is sufficiently dry, it can be separated again from the mixture, the mixture not being necessary anymore in terms of its cooling and transport functions. In doing so, it is preferably provided that the liquid is recycled from the mixture and is conveyed in a circuit for granulation. The supplied gas, generally air, leaves the process, whereas the liquid, e.g. water, is circulated back.

A further object of the invention is achieved when in a device of the type mentioned at the outset, the coolant supply with at least one first inlet for a liquid and at least one second inlet for a gas is made in order to supply a mixture of a liquid and a gas as the coolant.

A corresponding device is particularly suitable for carrying out a method according to the invention. It is advantageous that the device makes it possible to produce a granulate which has a high homogeneity of the granulate particles produced. Overall, the granulate particles have a less fissured surface and thus a better surface for storage and processing. The less fissured surface leads to a reduced fines fraction, which is an advantage both during conveying and during storage and during a later working or processing.

The mixing device is preferably an extruder, particularly a planetary roller extruder. As explained above, a targeted control or adjustment of the temperature during discharge can take place particularly using a planetary roller extruder, so that an optimum quality of the surface of the granulate grains can be obtained.

The coolant supply can have a connection particularly with a water reservoir. This makes it possible to mix water for granulation with a gas such as air and then, after passing through a cyclic process, to recycle it back into the water reservoir to be used in further granulation.

A device according to the invention can have a conveying line, along which the granulate can be transported by the coolant, and a separating device for separating the granulate from the coolant, the conveying line connecting together the granulating unit to the separating device. It is advantageous here to provide a circuit in which the coolant can be guided.

In a further aspect, the invention relates to a stabilizer composition in granulate form prepared according to the invention. The granulate is distinguished above all by the fact that, in comparison with a granulate which is granulated only using water, it has a substantially more homogeneous, less fissured surface. This results in advantages in terms of transport, storage and processing. In addition, the granulate displays less color deviations and the so-called multiple grains, which are an accumulation of a plurality of interconnected granulate particles, are also avoided.

In principle, any desired stabilizer compositions can be processed within the scope of the invention.

The stabilizer composition is preferably formed without heavy metals except for small proportions of zinc or zinc salts. In one variant, the stabilizer composition processed according to the invention comprises no lead apart from possible production-related impurities.

A stabilizer composition can in particular comprise the components described below, which are advantageously mixed or partially also reacted during production even before the addition of any impact resistance modifier. Unless stated otherwise, data in percent (%) relate to percent by weight.

The stabilizer composition processed according to the invention, which is free of heavy metals except for a small proportion of zinc, can generally be present with one or more additives, such as primary stabilizers, co-stabilizers, zeolites, antioxidants, fillers, softening agents, dyestuffs, pigments, antistatic agents, surface-active agents, foaming agents, (other) impact resistance modifiers, UV stabilizers, lubricants, processing agents and/or the like.

Examples of stabilizers in general are epoxides and epoxidized fatty acid esters, phosphites, thiophosphites and thiophosphates, polyols, 1,3-dicarbonyl compounds, mercaptocarboxylic acid esters, dihydropyridines, antioxidants, light stabilizers and UV absorbers, alkali metal and alkaline earth metal compounds, perchlorate salts, zeolites, hydrotalcites or dawsonites.

Unless already included, further customary additives, in particular those for PVC are e.g. lubricants, softening agents, other impact resistance modifiers, processing aids, blowing agents, fillers, antistatic agents, biocides, antifogging agents, pigments and dyes, metal deactivators as well as flame retardants (in this connection see "Handbook of PVC Formulating" by E. J. Wickson, John Wiley & Sons, New York 1993) and may likewise be admixed with the stabilizer composition.

Examples of components for, or as, stabilizers or additives are known to the person skilled in the art (R.-D. Maier, M. Schiller, Handbuch Kunststoff-Additive, 4th edition, Hanser Verlag, 2016). Some merely exemplary listings for such components are given below.

Suitable phosphites are particularly co-stabilizers for chlorine-containing polymers, e.g., trioctyl-, tridecyl-, tridodecyl-, tritridecyl-, tripentadecyl-, trioleyl-, tristearyl-, triphenyl-, tricresyl-, tris-nonylphenyl-, tris-2,4-t-butylphenyl- or tricyclohexylphosphite.

Various further phosphites, such as variously mixed aryldialkyl or alkyldiaryl phosphites, such as phenyldioctyl-, phenyldidecyl-, phenyldidodecyl-, phenylditridecyl-, phenylditetradecyl-, phenyldipentadecyl-, octyldiphenyl-, decyldiphenyl-, undecyldiphenyl-, dodecyldiphenyl-, tridecyldiphenyl-, tetradecyldiphenyl-, pentadecyldiphenyl-, oleyldiphenyl-, stearyldiphenyl- and dodecyl-2,4-di-t-butylphenylphosphite can likewise be used.

In addition, phosphites of various diols or polyols can also be advantageously used, e.g., tetraphenyldipropylene glycol diphosphite, polydipropylene glycol phenyl phosphite, tetramethylol cyclohexanol-decyl diphosphite, tetramethylol cyclohexanol-butoxyethoxy-ethyl diphosphite, tetramethylol cyclohexanol-nonylphenyl diphosphite, bis-nonylphenyl-ditrimethylolpropane diphosphite, bis-2-butoxyethyl-di-trimethylolpropane diphosphite, trishydroxyethyl isocyanurate-hexadecyl triphosphite, didecyl pentaerythritol diphosphite, distearyl pentaerythritol diphosphite, bis-2,4-di-t-butylphenyl pentaerythritol diphosphite. Also mixtures of these phosphites and aryl/alkyl phosphite mixtures can be used in a stabilizer composition according to the invention.

The organic phosphites can be used in an amount of, for example, from 0.01 to 10 parts by weight, expediently from 0.05 to 5 parts by weight, in particular from 0.1 to 3 parts by weight based on 100 parts by weight of polymer (e.g. PVC).

The following, for example, can be used as polyols: pentaerythritol, dipentaerythritol, tripentaerythritol, bistrimethylolpropane, trimethylolethane, bistrimethylolethane, trimethylolpropane, sorbitol, maltitol, isomaltitol, lactitol, lycasin, mannitol, lactose, leucrose, tris(hydroxyethyl)isocyanurate, tetramethylolcyclohexanol (TMCH), tetramethylolcyclopentanol, tetramethylolcyclopyranol, glycerol, diglycerol, polyglycerol, thiodiglycerol, 1-0-a-D-glycopyranosyl-D-mannitol dihydrate as well as polyvinyl alcohol and cyclodextrins. Among these, TMCH and the disaccharide alcohols are preferred. The polyols can be used in an amount of, for example, from 0.01 to 20 parts by weight, advantageously from 0.1 to 20 parts by weight, in particular from 0.1 to 10 parts by weight based on 100 parts by weight of polymer (e.g. PVC).

Thiophosphites or thiophosphates are compounds of the general type (RS)₃P, (RS) ₃P=O or (RS) ₃P=S. Exemplary compounds are trithiohexyl phosphite, trithiooctyl phosphite, trithiolauryl phosphite, trithiobenzyl phosphite, trithiophosphoric acid-tris-[carboxy-i-octyloxy]-methyl ester, trithiophosphoric acid-S,S,S-tris-[carbo-i-octyloxy]-methyl ester, trithiophosphoric acid-S,S,S-tris-[carbo-2-ethylhexyloxy]-methyl ester, trithiophosphoric acidS,S,S,-tris-1 [carbo-hexyloxy]-ethyl ester, trithiophosphoric acid-S,S,S-tris-1-[carbo-2-ethylhexyloxy]-ethyl ester, trithiophosphoric acid-S,S,S-tris-2- [carbo-2-ethylhexyloxy ethyl ester. The thiophosphites or thiophosphates can advantageously be present in an amount of from 0.01% to 20%, preferably from 0.1% to 5%, in particular from 0.1% to 1% in the chlorine-containing polymer (e.g. PVC).

Examples of 1,3-dicarbonyl compounds are acetylacetone, butanoylacetone, heptanoylacetone, stearoylacetone, palmitoylacetone, lauroylacetone, 7-*tert-*nonylthioheptanedione-2,4, benzoylacetone, dibenzoylmethane, lauroylbenzoylmethane, palmitoylbenzoylmethane, stearoylbenzoylmethane, isooctylbenzoylmethane, 5-hydroxycapronylbenzoylmethane, tribenzoylmethane, bis(4-methylbenzoyl)methane, benzoyl-p-chlorobenzoylmethane, bis(2-hydroxybenzoyl)methane, 4-methoxybenzoylbenzoylmethane, bis(4-methoxybenzoyl)methane, 1-benzoyl-1-acetylnonane, benzoyl-acetyl-phenyl methane, stearoyl-4-methoxy-benzoylmethane, bis(4-tert-butylbenzoyl)methane, benzoyl-formyl methane, benzoyl-phenylacetyl methane, bis(cyclohexanoyl)methane, di(pivaloyl)methane, methyl, ethyl, hexyl, octyl, dodecyl or octadecyl acetoacetate, ethyl, butyl, 2-ethylhexyl, dodecyl or octadecyl benzoyl acetate, ethyl, propyl, butyl, hexyl or octyl stearoyl acetate and dehydroacetic acid as well as their zinc, alkali metal, alkaline earth metal and/or aluminium salts. The 1,3-dicarbonyl compounds can be used in an amount of, for example, from 0.01 to 10 parts by weight, advantageously from 0.01 to 3 parts by weight, in particular from 0.01 to 2 parts by weight based on 100 parts by weight of polymer (e.g. PVC).

The following can be mentioned as examples of mercaptocarboxylic acid esters: esters of thioglycolic acid, thiomalic acid, mercaptopropionic acid, mercaptobenzoic acids or thiolactic acid as described, for example, in EP 0 365 483 A1. The mercaptocarboxylic esters also comprise corresponding polyol esters or their partial esters. The corresponding esters can advantageously be present in an amount of from 0.01% to 10%, preferably from 0.1% to 5%, in particular from 0.1% to 1% in a chlorine-containing polymer.

A stabilizer composition according to the invention can additionally comprise at least one epoxidized fatty acid ester. Esters of fatty acids from natural sources, such as soybean oil or rapeseed oil are preferred. The epoxy compounds are used in amounts of, for example, from 0.1 part by weight based on 100 parts by weight of composition, advantageously from 0.1 to 30 parts by weight, in particular from 0.5 to 25 parts by weight. Other examples are epoxidized polybutadiene, epoxidized linseed oil, epoxidized fish oil, epoxidized tallow, methylbutyl- or 2-ethylhexyl epoxy stearate, tris(epoxypropyl)isocyanurate, epoxidized castor oil, epoxidized sunflower oil, 3-phenoxy-1,2-epoxypropane, bisphenol A diglycidyl ether, vinylcyclohexene diepoxide and/or dicyclopentadiene diepoxide. Bisphenol A and bisphenol F derivatives can also be considered as epoxides.

Furthermore, monomeric dihydropyridines and/or polydihydropyridines as disclosed in EP 0 796 888 A2 can be provided as stabilizers. The (poly-)di-hydropyridines can advantageously be used in the chlorine-containing polymer in an amount of from 0.001 to 5 parts by weight, in particular from 0.005 to 1 parts by weight based on 100 parts by weight of the polymer. Furthermore, sterically hindered amines can be provided as stabilizers as disclosed in EP 0 796 888 A2.

A stabilizer composition according to the invention can contain alkali metal and alkaline earth metal compounds, in particular the carboxylates of the acids described above, but also corresponding oxides or hydroxides, carbonates or basic carbonates. Their mixtures with organic acids can also be taken into account. Examples are NaOH, KOH, CaO, Ca(OH)₂, MgO, Mg(OH)₂, CaCO₃, MgCO₃, dolomite, zinc oxide, zinc carbonate as well as fatty acid Na, K, Ca, Mg or Zn salts. In the case of alkaline earth metal and Zn carboxylates, it is also possible to use their adducts with MO or M(OH)₂ (M = Ca, Mg, Sr or Zn), the so-called "overbased" compounds. Alkali metal carboxylates, alkaline earth metal carboxylates and/or aluminum carboxylates, e.g., sodium stearates, potassium stearates, calcium stearates or aluminum stearates are preferably additionally used in a stabilizer according to the invention.

The stabilizer composition can comprise, for example, one or more perchlorate salts, e.g., those of the general formula M(ClO₄)n, where M stands for Li, Na, K, Mg, Ca, Ba, Zn, Al, Ce or La. The index n varies from 1 to 3 according to the valency of M and is thus 1, 2 or 3. The perchlorate salts can be complexed with alcohols or ether alcohols. The particular perchlorate can be used here in various customary presentation forms, for example, as a salt or aqueous solution applied onto a carrier material, such as PVC, Ca silicate, zeolites or hydrotalcite, or can be obtained by the chemical reaction of hydrotalcite with perchloric acid. Alternatively or additionally, it is also possible to use perchlorate-intercalated phyllosilicates, such as hydrotalcites. Exemplary compounds of this group are Alcamizer^{®} products of Kisuma Chemicals. The perchlorates can be used in an amount of, for example, from 0.001 to 5 parts by weight, advantageously from 0.01 to 3 parts by weight, particularly preferably from 0.01 to 2 parts by weight based on 100 parts by weight of PVC or another polymer.

Co-stabilizers are compounds which can impart a further stabilizing contribution to halogen-containing polymers. Possible co-stabilizers can be selected from the group consisting of 1,3-diketone compounds, polyols, metal salts, natural or synthetic minerals, such as hydrotalcites, hydrocalumites and zeolites, amino acid derivatives, organic esters of phosphorous acid and epoxy compounds.

Examples of 1,3-diketone compounds include, but are not limited to, dibenzoylmethane, stearoylbenzoylmethane, palmitoylbenzoylmethane, myristoyl benzoyl methane, lauroylbenzoylmethane, benzoylacetone, acetylacetone, tri-benzoylmethane, diacetylacetobenzene, p-methoxystearoylacetophenone, acetoacetic esters and acetylacetone and the metal salts thereof, in particular those of lithium, sodium, potassium, calcium, magnesium, titanium and/or aluminum.

Co-stabilizers from the group of polyols include, but are not limited to, glycerol, pentaerythritol, di- and tripentaerythritol, trismethylolpropane (TMP) , di-TMP, sorbitol, mannitol, maltitol, saccharides, disaccharides (in particular sucrose, 4-O-β-D-galactopyranosyl-D-glucose, 4-O-alpha-D-glucopyranosyl-D-glucose, 6-O-(6-deoxy-alpha-L-mannopyranosyl)-D-glucose, alpha-D-glucopyranosyl-alpha-D-glucopyranoside, 6-O-alpha-D-glucopyranosyl-D-glucose, 4-O-β-D-glucopyranosyl-D-glucose, 2-O-β-D-glucopyranosyl-D-glucose, 6-O-alpha-D-glucopyranosyl-D-glucitol, 3-O-alpha-D-glucopyranosyl-D-fructose, 6-O-β-D-glucopyranosyl-D-glucose, 4-O-β-D-galactopyranosyl-D-glucitol, 4-O-alpha-D-glucopyranosyl-D-glucitol, 6-O-alpha-D-galactopyranosyl-D-glucose, 3-O-alpha-D-galactopyranosyl-D-myo-inositol, 4-O-β-D-galactopyranosyl-D-fructose, 4-O-β-D-galactopyranosyl-β-D-glucopyranose, β-O-alpha-D-glucopyranosyl-D-fructose, 4-O-β-D-galactopyranosyl-alpha-D-glucopyranose, 2-O-(6-deoxy-alpha-L-mannopyranosyl)-D-glucose, 4-O-alpha-D-glucopyranosyl-D-fructose, 2-O-β-D-glucopyranosyl-alpha-D-glucopyranose, 1-O-alpha-D-glucopyranosyl-D-mannitol, 6-O-(6-deoxy-alpha-L-mannopyranosyl)-β-D-glucopyranose, 2-O-β-D-glucopyranosyl-β-D-glucopyranose, 6-O-α-D-glucopyranosyl-alpha-D-glucopyranose, 2-O-alpha-D-glucopyranosyl-alpha-D-glucopyranose, 2-O-alpha-D-glucopyranosyl-β-D-glucopyranose, 1-O-alpha-D-glucopyranosyl-D-fructose, 6-O-alpha-D-glucopyranosyl-alpha-D-fructofuranose, 6-O-alpha-D-glucopyranosyl-D-glucitol, 4-O-β-D-galactopyranosyl-D-glucitol, 4-O-alpha-D-glucopyranosyl-D-glucitol, 1-O-alpha-D-glucopyranosyl-D-mannitol, trisaccharides, polysaccharides, in particular polyvinyl alcohols, starch, cellulose and their partial esters.

Examples of antioxidants include, but are not limited to, alkylphenols, hydroxyphenylpropionates, hydroxybenzyl compounds, alkylidene bisphenols, thiobisphenols and aminophenols, in particular, e.g. 2,6-di-tert-butyl-4-methylphenol, 2,6-di-benzyl-4-methylphenol, stearyl-3-(3'-5'-di-tert-butyl-4'-hydroxyphenyl)propionate, 4,4'-thiobis-(3-methyl-6-*tert*-butylphenol), 4-nonylphenol, 2,2'-methylenebis(4-methyl-6-*tert*-butylphenol), 2,5-di-tert-butylhydroquinone, 4,4',4"-(1-methyl-1-propanyl-3-ylidene)tris [2-(1,1-dimethylethyl)-5-methylphenol], their neutral or basic lithium, magnesium, calcium and aluminum salts as well as sterically hindered amines and/or phosphonites as well as the mixtures thereof.

Examples of co-stabilizers from the group of the metal salts include, but are not limited to, hydroxides, oxides, carbonates, basic carbonates and carboxylic acid salts of lithium, sodium, potassium, magnesium, calcium, aluminum, titanium and the like, as long as no heavy metal (with the exception of zinc) is used. In one embodiment of the present invention, the metal salts can be the salts of higher carboxylic acids, for example, C₆-C₂₂ carboxylic acids, such as stearic acid, palmitic acid, myristic acid, lauric acid, oleic acid and ricinoleic acid.

Examples of natural and synthetic minerals include, but are not limited to, A3, A4, A5 zeolites, zeolites of the mordenite, erionite, faujasite X or Y type as well as ZSM-5 zeolites, hydrotalcites (of the Alcamizer^{®} 1- and 4-type) and/or the mixtures thereof.

Also mesoporous materials, in particular mesoporous silicates, such as MCM-41 or SBA-15 can be the components of a stabilizer composition according to the invention.

Examples of co-stabilizers from the group of amino acid derivatives include, but are not limited to, glycine, alanine, lysine, tryptophan, acetylmethionine, pyrrolidonecarboxylic acid, α-aminocrotonic acid, α-aminoacrylic acid, α-aminoadipic acid and the like as well as the corresponding esters thereof. The alcohol components of these esters can include monohydric alcohols, such as methyl alcohol, ethyl alcohol, propyl alcohol, i-propyl alcohol, butyl alcohol, α-ethylhexanol, octyl alcohol, i-octyl alcohol, lauryl alcohol, stearyl alcohol and the like as well as polyols, such as ethylene glycol, propylene glycol, 1,3-butanediol, 1,4-butanediol, glycerol, diglycerol, trismethylolpropane, pentaerythritol, dipentaerythritol, erythrithol, sorbitol, mannitol and the like.

Examples of co-stabilizers from the group of the esters of phosphorous acid include, but are not limited to, triaryl phosphites, such as triphenyl phosphite, tris(p-nonylphenyl)phosphite, alkylaryl phosphites, such as monoalkyldiphenyl phosphites, for example, diphenylisooctyl phosphite, diphenylisodecyl phosphite, and dialkylmonophenyl phosphites, such as phenyldiisooctyl phosphite or phenyldiisodecyl phosphite, and trialkyl phosphites, such as triisooctyl phosphite, tristearyl phosphite and the like.

Another component which can be added to a stabilizer composition within the scope of the invention is titanium dioxide. Titanium dioxide essentially occurs in nature in three modifications: anatase, brookite and rutile. Both anatase and rutile have industrial significance as pigments. The high refractive indices of 2.55 (anatase) and 2.75 (rutile) justify the brightening and hiding capacity and thus their use as a white pigment. With appropriate dosing, rutile absorbs light below 400 nm completely, i.e. the entire UV range. The absorption of anatase is slightly shifted to shorter wavelengths. On the contrary, brookite does not exhibit any photocatalytic activity and is therefore not preferred as a further component of the stabilizer composition, but can be added as a filler.

The titanium dioxide advantageously has a rutile structure for outdoor applications. For all other applications, it can have both the anatase and rutile structures. Combinations of these modifications are also possible.

The titanium dioxide can be used in an amount of from about 0.01% to about 20% in the stabilizer composition. In another embodiment, the titanium dioxide can be used in an amount of about 0.05% to about 10.0% or of about 0.1% to about 5%, in an amount of about 4%, for example. The titanium dioxide should be present in a finely divided and well dispersed form.

Paraffin wax can be used, for example, as a lubricant. In one embodiment, the paraffin wax can be a mixture of alkanes with the general empirical formula CₙH₂ₙ₊₂, where n is an integer from 20 to 100. The mixture can consist both of straight-chain and odd-chain components and of purely straight-chain components. Examples of commercially available and usable paraffin waxes include, but are not limited to, Fischer-Tropsch paraffins and related compounds.

Fillers can be provided as a constituent of a stabilizer composition, but are not necessarily a constituent thereof.

The further co-stabilizers indicated above can be used in amounts identical to the lubricants.

Further features, advantages and effects of the invention result from the exemplary embodiment shown below.

In the drawings to which reference is hereby made:
Fig. 1 shows a planetary roller extruder;
Fig. 2 shows a schematic diagram of a granulating unit;
Fig. 3 shows photographs of granulates produced.

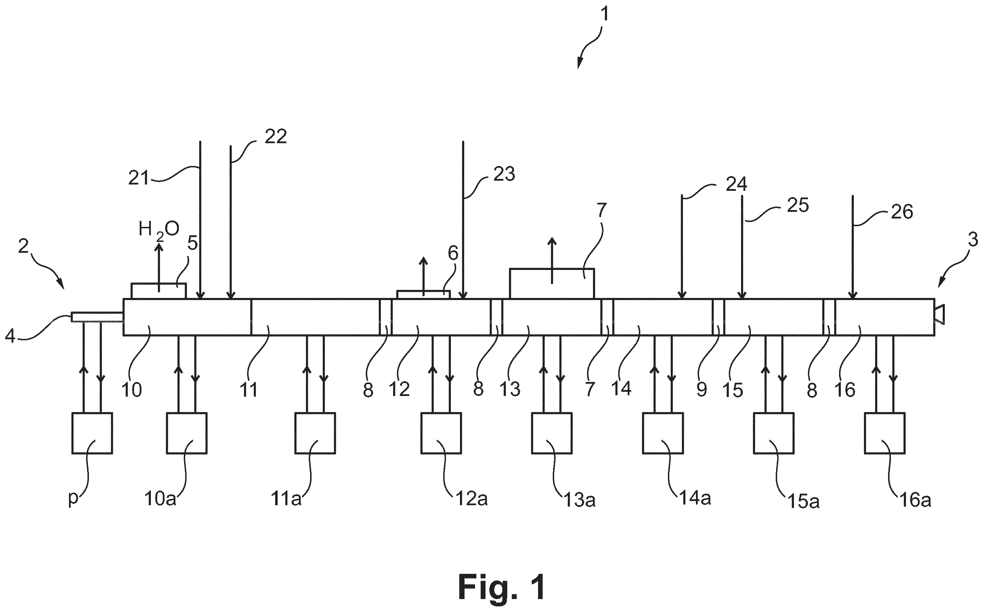

An extruder used in the processing or production of a stabilizer composition is shown in Fig. 1. The extruder is a planetary roller extruder 1.

The planetary roller extruder has a first end 2 and a second end 3 located opposite the first end 2. The planetary roller extruder 1 is composed of a plurality of modules 10, 11, 12, 13, 14, 15, 16. Each of these modules 10, 11, 12, 13, 14, 15, 16 is equipped with a circuit 10a, 11a, 12a, 13a, 14a, 15a, 16a with a heating and/or cooling function respectively. A fluid, particularly an oil, can be circulated in these circuits 10a, 11a, 12a, 13a, 14a, 15a, 16a in order to bring the individual modules 10, 11, 12, 13, 14, 15, 16 to a desired temperature or to keep them at this temperature during the processing of a composition. If necessary, it is also possible to carry out temperature changes. A similar circuit p is provided for controlling the temperature of a spindle 4.

A spindle 4 of the planetary roller extruder 1 passes through the modules 10, 11, 12, 13, 14, 15, 16. The spindle 4 is the central drive element. On the outside, the spindle 4 is surrounded by a multitude of non-visible planetary spindles (not shown), as is customary for a planetary roller extruder 1. The number of planet spindles arranged around the spindle 4 within the modules 10, 11, 12, 13, 14, 15, 16 can be varied for the individual modules 10, 11, 12, 13, 14, 15, 16. Typically, three, five or seven planet spindles are provided in each module 10, 11, 12, 13, 14, 15, 16. Furthermore, the planetary roller extruder 1 can comprise dispersing disks 8 between individual modules 10, 11, 12, 13, 14, 15, 16 as well as a degassing disk 9 downstream thereof.

The spindle 4 is connected to a motor, which is not shown and can set the spindle 4 in a rotary motion. In doing so, the spindle 4 runs at a freely selectable rotational speed, for example, typically at rotational speeds between 200 rpm and 400 rpm, with an internal diameter of the extruder of 100 mm to 120 mm and a diameter of a central spindle of 70 mm to 75 mm. Rotational speeds in the range of about 275 rpm to 375 rpm have proven to be particularly useful for the exemplary extruder dimensions. Shearing forces can be set in the modules 10, 11, 12, 13, 14, 15, 16 by means of the rotational speed as well as the number of planet spindles arranged around the spindle 4, which allows stabilizer compositions, which otherwise cannot be produced or can be produced only with an unsatisfactory result, to be produced, as will still be explained below.

The planetary roller extruder 1 according to Fig. 1 also has a plurality of outlets 5, 6, 7. The outlets 5, 6, 7 do not necessarily have to be provided, but are favorable and advantageous when a stabilizer composition tending to form a large amount of foam during processing is processed. This is the case, e.g., when stabilizer compositions with fatty acids or their derivatives are processed, wherein water is liberated during their reaction. The outlets 5, 6, 7 arranged on an upper side of the housing of the individual modules 10, 11, 12, 13, 14, 15, 16 of the planetary roller extruder 1 are preferably formed rectangular in cross-section. In particular, they can be outlets 5, 6, 7 which extend upwards in the form of a rectangular cuboid or slit, enabling a controlled foaming to occur along with liberation of water, without the stabilizer composition to be processed leaking out therefrom. Rather, only a leakage of water takes place while the stabilizer composition to be processed is driven forward by the spindle 4 in cooperation with the respective planetary spindles downstream in the direction of the second end 3.

The planetary roller extruder 1 must be charged in a suitable manner for the production of a stabilizer composition. For this purpose, individual feeding devices or feeders 21, 22, 23, 24, 25, 26 can be provided. The feeding of individual components for the preparation of the stabilizer composition take place in the corresponding feeders 21, 22, 23, 24, 25, 26, it being possible here to adjust a feed in terms of the temperature of the modules 10, 11, 12, 13, 14, 15, 16, the shearing forces and the degree of homogenization of the stabilizer components.

When a stabilizer composition is produced, the temperature of the individual modules 10, 11, 12, 13, 14, 15, 16 are separately controlled by means of the circuits 10a, 11a, 12a, 13a, 14a, 15a, 16a. Table 2 below lists typical temperatures for individual modules in the production of a stabilizer composition, the stabilizer composition being produced with an impact resistance modifier. The temperature of the melt pump refers to that of a pump arranged downstream of the extruder for pressurizing the discharged stabilizer composition.

**Table 2: Circuit temperatures of individual modules**

| | **Module** | | | | | | | | **Melt pump** |
|---|---|---|---|---|---|---|---|---|---|
| | p | 10 | 11 | 12 | 13 | 14 | 15 | 16 | |
| **Circuit temperature [°C]** | 100 | 110 | 190 | 240 | 200 | 180 | 120 | 120 | 90 |

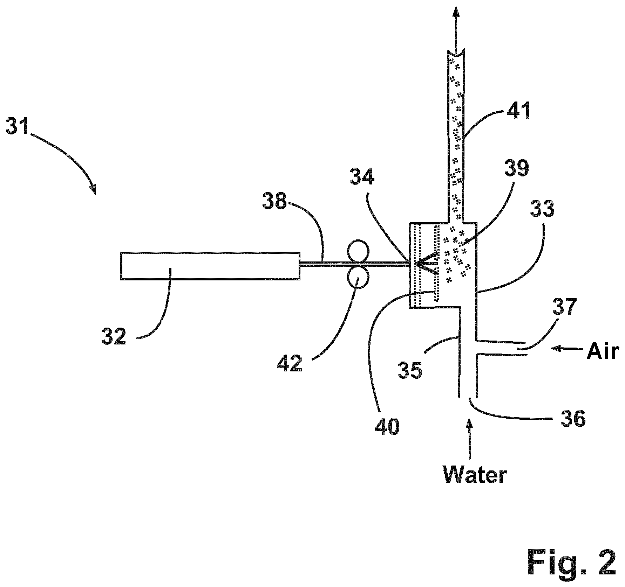

A device 31 according to the invention is shown schematically in Fig. 2. The device 31 comprises a mixing device 32, which can be the planetary roller extruder 1 explained in more detail above, but this is not mandatory. In principle, it could also be possible to use another extruder. As explained, however, a planetary roller extruder 1 is preferred. A stabilizer composition 38 processed by extrusion is discharged from the mixing device 32 without pressure and is driven forward in the form of a strand by means of a pump or, as shown, by means of a roller 42 to a granulating unit 33, to which the strand enters through openings 34. For this purpose, the strand or the stabilizer composition 38 is split into partial strands through a perforated plate, as indicated schematically in Fig. 2. For this purpose, the perforated plate can be designed with a conic formation onto which the strand hits so that partial strands are guided to the openings 34.

A separating unit 40 is provided in the granulating unit 33 with which the stabilizer composition supplied as a strand is deflected. The separating unit 40 can particularly be one or more rotating knives. The granulating unit 33 has a further opening in order for the deflected granulate 39 to be discharged. As shown in Fig. 2, this further opening can be present on the head side so that the deflected granulate 39 is discharged against the force of gravity. A coolant supply 35 is provided for this purpose and for cooling purposes, by means of which a coolant can be supplied into the granulating unit 33. The deflected granulate 39 can be discharged upwards against the force of gravity by means of the supplied coolant. This brings advantages in that the granulate 39 cannot fall downwards and stick back together, but rather is carried upwards with a high cooling intensity and is cooled in a relatively short time period. According to the invention, it is provided that the coolant supply 35 has a first inlet 36 for a liquid, e.g. water, and a second inlet 37 for a gas, e.g. air. As a result, a water-air mixture can be produced which, in terms of granulate quality, has clear advantages over known granulates because the granulate 39 produced is very homogeneous and, in particular, has a surface which is not very fissured. In addition, multiple grains are avoided and after conveying out along the conveying line 41, a better drying behavior was also noted.

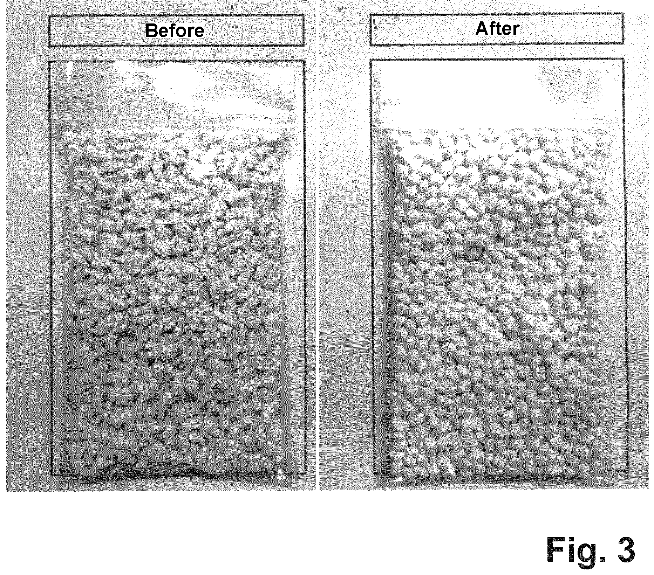

The advantages achieved can be seen from a comparison of a stabilizer composition 38 in Fig. 3. Stabilizer compositions 38 conventionally granulated exclusively with water can have an appearance as shown in the photograph on the left in Fig. 3. If the same stabilizer composition 38 is granulated with a water-air mixture in place of water under identical extrusion conditions and in the identical device 31, a granulate 39 is obtained as can be seen in the photograph on the right in Fig. 3. A granulate 39 of this type has distinctly better properties for transport and storage, since the fines fraction is distinctly lower, or distinctly lower fines fractions occur later on during storage and during further transport or processing. In addition, a higher color fastness is provided.

In a typical extrusion process, the stabilizer composition 38 comes out of an extruder, e.g. a planetary roller extruder 1, at a temperature of around 55 °C to 100 °C. Water can be supplied at a temperature of 35 °C to 50 °C, for instance. The air supplied is at room temperature. The flow rates of water and air may be adapted to the throughput of the stabilizer composition 38. At a throughput of the stabilizer composition 38 of about 100 kg/h to 120 kg/h, a flow rate of water in liquid form of 1 m³/h to 3.5 m³/h and a flow rate of air of about 86 Nm³/h to 110 Nm³/h is recommended.

The number of holes in the perforated plate can likewise be optimized in order to achieve optimum granulation conditions. Usually, a perforated plate with five holes with a diameter of approximately 4.5 mm can be provided. The temperatures of the perforated plate while the strand of the stabilizer composition 38 is granulated or while it is pressed there through are approximately in the range from 80 °C to 120 °C. The separating device can be equipped with rotating knives which rotate, for example, at 650 rpm to 1300 rpm.

The device 31 can be equipped with a circuit not shown in Fig. 2. The granulate 39 is discharged through a conveying line 41. A water separator or another separating device, for example, can be provided on this conveying line 41 to separate the granulate 39 produced from the water. The water is then recycled and can be used again as a coolant. The granulate 39, which is separated from water, is subsequently transported further via a vibrating conveyor and dried further from below with air in the process.

## Claims

1. A method for producing a stabilizer composition (38) in granulate form, wherein the stabilizer composition (38) is produced and is pressed through at least one opening (34) in a flowable state as a strand, then the stabilizer composition (38) emerging from the at least one opening (34) is cut to length by forming a granulate (39) under coolant supply, **characterized in that** a mixture of a liquid and a gas is supplied as the coolant.

2. The method according to Claim 1, **characterized in that** water is used as the liquid.

3. The method according to Claim 1 or 2, **characterized in that** air is used as the gas.

4. The method according to one of Claims 1 to 3, **characterized in that** the granulate (39) is conveyed by the mixture.

5. The method according to one of Claims 1 to 4, **characterized in that** the stabilizer composition (38) is produced by an extruder.

6. The method according to one of Claims 1 to 5, **characterized in that** the stabilizer composition (38) is produced by a planetary roller extruder (1).

7. The method according to one of Claims 1 to 6, **characterized in that** the stabilizer composition (38) is pressed through a plate having a plurality of openings (34).

8. The method according to Claim 7, **characterized in that** the stabilizer composition (38) is conveyed to the plate by a pump.

9. The method according to one of Claims 1 to 8, **characterized in that** the granulate (39) is conveyed to a separating device by the mixture, then the granulate (39) is separated from the mixture in the separating device and is optionally dried thereafter.

10. A device (31) for producing a stabilizer composition (38) in granulate form, comprising a mixing device (32) to process components into a flowable stabilizer composition (38), a granulating unit (33) with at least one opening (34) through which the flowable stabilizer composition (38) supplied from the mixing device (32) can be introduced, and a separating unit (40) with which the stabilizer composition (38) introduced into the granulating unit (33) can be cut to length by forming a granulate (39), and a coolant supply (35) comprising at least one first inlet (36) for a liquid, to apply a coolant to the granulate (39), **characterized in that** the coolant supply (35) further comprises at least one second inlet (37) for a gas to supply a mixture of a liquid and a gas as the coolant.

11. The device (31) according to Claim 10, **characterized in that** the mixing device (32) is an extruder, particularly a planetary roller extruder.

12. The device (31) according to Claim 10 or 11, **characterized in that** the coolant supply (35) is in communication with a water reservoir.

13. The device (31) according to one of Claims 10 to 12, **characterized in that** a conveying line (41), along which the granulate can be transported by the coolant, and a separating device for separating the granulate (39) from the coolant are provided, wherein the conveying line (41) connects the together the granulating unit (33) and the separating device.

14. The device (31) according to one of Claims 10 to 13, **characterized in that** a circuit is provided in which the coolant can be guided.

15. A stabilizer composition (38) in a granulate form, which is obtained according to one of Claims 1 to 9.

## Patentansprüche

1. Verfahren zur Herstellung einer Stabilisatorzusammensetzung (38) in Granulatform, bei dem die Stabilisatorzusammensetzung (38) hergestellt wird und in fließfähigen Zustand als Strang durch mindestens eine Öffnung (34) gepresst wird, wobei die aus der mindestens einen Öffnung (34) austretende Stabilisatorzusammensetzung (38) unter Kühlmittelzufuhr auf Länge geschnitten wird, wodurch ein Granulat (39) entsteht, **dadurch gekennzeichnet, dass** ein Gemisch aus einer Flüssigkeit und einem Gas als Kühlmittel zugeführt wird.

2. Verfahren nach Anspruch 1, **dadurch gekennzeichnet, dass** Wasser als Flüssigkeit verwendet wird.

3. Verfahren nach Anspruch 1 oder 2, **dadurch gekennzeichnet, dass** Luft als Gas verwendet wird.

4. Verfahren nach einem der Ansprüche 1 bis 3, **dadurch gekennzeichnet, dass** das Granulat (39) durch das Gemisch gefördert wird.

5. Verfahren nach einem der Ansprüche 1 bis 4, **dadurch gekennzeichnet, dass** die Stabilisatorzusammensetzung (38) durch einen Extruder hergestellt wird.

6. Verfahren nach einem der Ansprüche 1 bis 5, **dadurch gekennzeichnet, dass** die Stabilisatorzusammensetzung (38) mittels eines Planetwalzenextruder (1) hergestellt wird.

7. Verfahren nach einem der Ansprüche 1 bis 6, **dadurch gekennzeichnet, dass** die Stabilisatorzusammensetzung (38) durch eine Platte mit einer Vielzahl von Öffnungen (34) gepresst wird.

8. Verfahren nach Anspruch 7, **dadurch gekennzeichnet, dass** die Stabilisatorzusammensetzung (38) mittels einer Pumpe zur Platte befördert wird.

9. Verfahren nach einem der Ansprüche 1 bis 8, **dadurch gekennzeichnet, dass** das Granulat (39) mittels des Gemischs zu einer Trennvorrichtung befördert wird, dann das Granulat (39) in der Trennvorrichtung vom Gemisch getrennt wird und danach gegebenenfalls getrocknet wird.

10. Vorrichtung (31) zur Herstellung einer Stabilisatorzusammensetzung (38) in Granulatform, die eine Mischvorrichtung (32) zum Verarbeiten von Komponenten zu einer fließfähigen Stabilisatorzusammensetzung (38), eine Granuliervorrichtung (33) mit mindestens einer Öffnung (34), durch die die von der Mischvorrichtung (32) zugeführte fließfähige Stabilisatorzusammensetzung (38) eingeleitet werden kann, sowie eine Trennvorrichtung (40), mit der die in die Granuliervorrichtung (33) eingeleitete Stabilisatorzusammensetzung (38) in Längen geschnitten wird, wodurch ein Granulat (39) entsteht, und eine Kühlmittelleitung (35) mit mindestens einem ersten Eintritt (36) für eine Flüssigkeit umfasst, um ein Kühlmittel auf das Granulat (39) anzuwenden, **dadurch gekennzeichnet, dass** die Kühlmittelleitung (35) mindestens einen zweiten Eintritt (37) für ein Gas umfasst, um ein Gemisch aus einer Flüssigkeit und einem Gas als Kühlmittel bereitzustellen.

11. Vorrichtung (31) nach Anspruch 10, **dadurch gekennzeichnet, dass** die Mischvorrichtung (32) ein Extruder ist, insbesondere ein Planetwalzenextruder.

12. Vorrichtung (31) nach Anspruch 10 oder 11, **dadurch gekennzeichnet, dass** die Kühlmittelleitung (35) mit einem Wasserbehälter verbunden ist.

13. Vorrichtung (31) nach einem der Ansprüche 10 bis 12, **dadurch gekennzeichnet, dass** eine Förderleitung (41), entlang der das Granulat durch das Kühlmittel transportiert werden kann, sowie eine Trennvorrichtung zum Trennen des Granulats (39) vom Kühlmittel vorgesehen sind, wobei die Förderleitung (41) die Granuliervorrichtung (33) mit der Trennvorrichtung verbindet.

14. Vorrichtung (31) nach einem der Ansprüche 10 bis 13, **dadurch gekennzeichnet, dass** ein Kreislauf vorgesehen ist, in dem das Kühlmittel geführt werden kann.

15. Stabilisatorzusammensetzung (38) in Granulatform, die nach einem der Ansprüche 1 bis 9 erhalten wird.

## Revendications

1. Procédé pour la production d'une composition de stabilisant (38) sous forme de granulés, dans lequel la composition de stabilisant (38) étant produite et étant pressée à travers au moins une ouverture (34) dans un état capable de s'écouler sous forme d'un brin, puis la composition de stabilisant (38) sortant de ladite ou desdites ouvertures (34) étant découpée à la longueur par formation de granulés (39) sous un apport de fluide de refroidissement, **caractérisé en ce qu'**un mélange d'un liquide et d'un gaz étant apporté en tant que le fluide de refroidissement.

2. Procédé selon la revendication 1, **caractérisé en ce que** de l'eau est utilisée en tant que le liquide.

3. Procédé selon la revendication 1 ou 2, **caractérisé en ce que** de l'air est utilisé en tant que le gaz.

4. Procédé selon l'une des revendications 1 à 3, **caractérisé en ce que** les granulés (39) sont acheminés par le mélange.

5. Procédé selon l'une des revendications 1 à 4, **caractérisé en ce que** la composition de stabilisant (38) est produite par une extrudeuse.

6. Procédé selon l'une des revendications 1 à 5, **caractérisé en ce que** la composition de stabilisant (38) est produite par une extrudeuse à rouleaux planétaires (1).

7. Procédé selon l'une des revendications 1 à 6, **caractérisé en ce que** la composition de stabilisant (38) est pressée à travers une plaque comportant une pluralité d'ouvertures (34).

8. Procédé selon la revendication 7, **caractérisé en ce que** la composition de stabilisant (38) est acheminée vers la plaque par une pompe.

9. Procédé selon l'une des revendications 1 à 8, **caractérisé en ce que** les granulés (39) sont acheminés vers un dispositif de séparation par le mélange, puis les granulés (39) sont séparés du mélange dans le dispositif de séparation et sont éventuellement séchés par la suite.

10. Dispositif (31) pour produire une composition de stabilisant (38) sous forme de granulés, comprenant un dispositif de mélange (32) pour transformer des composants en une composition de stabilisant fluide (38), une unité de granulation (33) comportant au moins une ouverture (34) à travers laquelle la composition de stabilisant fluide (38) apportée par le dispositif de mélange (32) peut être introduite, et une unité de séparation (40) avec laquelle la composition de stabilisant (38) introduite dans l'unité de granulation (33) peut être découpée à la longueur par formation de granulés (39), et un apport en fluide de refroidissement (35) comprenant au moins une première entrée (36) pour un liquide, afin d'appliquer un fluide de refroidissement aux granulés (39), **caractérisé en ce que** l'apport de fluide de refroidissement (35) comprend en outre au moins une deuxième entrée (37) pour un gaz afin d'apporter un mélange d'un liquide et d'un gaz en tant que le fluide de refroidissement.

11. Dispositif (31) selon la revendication 10, **caractérisé en ce que** le dispositif de mélange (32) est une extrudeuse, en particulier une extrudeuse à rouleaux planétaires.

12. Dispositif (31) selon la revendication 10 ou 11, **caractérisé en ce que** l'apport en fluide de refroidissement (35) est en communication avec un réservoir d'eau.

13. Dispositif (31) selon l'une des revendications 10 à 12, **caractérisé en ce qu'**une ligne d'acheminement (41), le long de laquelle les granulés peuvent être acheminés par le fluide de refroidissement, et un dispositif de séparation pour séparer les granulés (39) du fluide de refroidissement sont prévus, dans lequel la ligne d'acheminement (41) relie entre eux l'unité de granulation (33) et le dispositif de séparation.

14. Dispositif (31) selon l'une des revendications 10 à 13, **caractérisé en ce qu'**un circuit est prévu dans lequel le fluide de refroidissement peut être guidé.

15. Composition de stabilisant (38) sous forme de granulés, obtenue selon l'une des revendications 1 à 9.
